Europäisches Patentamt

European Patent Office

Office européen des brevets

(19)

(11) Publication number: **0 086 057**
A2

(12)

# EUROPEAN PATENT APPLICATION

(21) Application number: **83300396.5**

(22) Date of filing: **26.01.83**

(51) Int. Cl.³: **B 32 B 7/02**
**B 65 D 65/40, B 32 B 27/08**

(30) Priority: **04.02.82 GB 8203194**

(43) Date of publication of application:
**17.08.83 Bulletin 83/33**

(84) Designated Contracting States:
**AT BE CH DE FR GB IT LI NL SE**

(71) Applicant: **DRG (UK) LIMITED**
**1 Redcliffe Street**
**Bristol, BS99 7QY(GB)**

(72) Inventor: **Jefferis, Reginald Alan**
**83 Footshill Road**
**Hanham Bristol(GB)**

(72) Inventor: **Barnes, Stanley George**
**12 Trendlewood Park**
**Stapleton Bristol(GB)**

(74) Representative: **Armitage, Ian Michael et al,**
**MEWBURN ELLIS & CO. 2/3 Cursitor Street**
**London EC4A 1BQ(GB)**

(54) Packaging material with controlled gas permeability and packages made therefrom.

(57) A packaging sheet material comprising two gasperme-
able plies which are sealed together in some areas but not in
others, or more strongly in some areas than in others. This
material is used to package foodstuffs and can give greater
permeability to gases or vapours one way than the other.
The plies may for example be polyester and polyethylene.

EP 0 086 057 A2

-1-

## PACKAGING MATERIAL WITH CONTROLLED GAS
## PERMEABILITY AND PACKAGES MADE THEREFROM

This invention relates to packages for articles in which a higher gas permeability through the package wall is required in one direction than in the other.

Packaging of fruit and vegetable produce to extend their shelf-life presents many problems. Products include freshly harvested fruits and vegetables, freshly germinated pulse seeds and freshly roasted coffee beans. The problems are caused by the complicated physical and biochemical reactions that take place. Immediately after harvesting, loss of moisture gives wilting. Packaging in a highly moisture-impermeable material, however, gives rapid growth of slime and rot moulds. Oxygen is used by the plant respiring, and is necessary for ripening. Completion of ripening is also sometimes required whilst the product is packaged. Packaging in a completely oxygen-impermeable pack prevents further ripening and may allow dangerous anaerobic bacteria to flourish. Normal atmosphere, especially at normal ambient temperatures, can give over-ripening. Carbon dioxide is given off by continuing respiration. After harvesting, mould infections attack wounded tissues that, owing to senescence, are no longer able to respond to injuries and microbial attack. Enzyme-induced reactions include oxidation and cause changes that give texture and flavour deterioration.

The simplest and most frequently used method to pack fresh fruits and vegetables uses mechanical support with complete breathability. These include such materials as netting and perforated films. Films with limited perforation and microporous films are used to give some reduced moisture loss. In all cases maximum shelf-life is short, but can be extended by low temperatures (such as $2^{\circ}$ to $4^{\circ}C$) and high humidities.

Other methods include use of controlled or modified atmospheres, but these are expensive. They include use of high carbon dioxide/low oxygen atmospheres to retard deliberately the ripening of fruit.

Chemical treatments used include application of fungistatic substances onto the surface especially of fruits. A problem is the limited range of materials that are effective but have low oral toxicity. Wrapping paper impregnated with volatile fungistats such as diphenyl have been used. These treatments only retard the growth of the fungi that cause rots and slimes, but do not affect the respiratory processes or delay the loss of moisture.

Substances that require protection from oxygen but evolve carbon dioxide include freshly ground coffee beans. These are sometimes packed in packages with a corner valve that allows carbon dioxide to escape to atmosphere.

It is highly desirable to extend the shelf-life of plant produce even by a few days. Packages for such products require a complicated balance of different permeabilities, especially to oxygen, carbon dioxide and moisture vapour. Most commercially available films used in packaging have a constant and similar ratio of permeability to oxygen and carbon dioxide, When tested under the same conditions of thickness, differential gas pressure, temperature and humidity, the permeability rates of carbon dioxide to oxygen are in a ratio of about 5 to 1. The ratio depends on the specific film used, but most are fairly close to this ratio. Polyethylene and polypropylene films have low moisture vapour permeabilities but high permeability to oxygen and carbon dioxide. Films such as cellulose acetate and plasticised polyvinylchloride have high permeabilities to moisture vapour, carbon dioxide and oxygen.

The present invention provides a packaging material comprising two plies of material which are both permeable to gases which it is desired should traverse the package wall, the two plies being secured together in some areas but not in others, or more strongly in some areas than in others.

The invention will be illustrated with reference to the following examples.

### EXAMPLE 1

A polyester film is laminated to a polyethylene film using adhesive applied in a discontinuous manner such as a pattern of stripes or dots. Thus the polyester and polyethylene films are adhered together in some areas but not in others.

The laminate is made into a sealed pouch around a product, with the polyester layer outside and the polyethylene layer inside. Thus, polyethylene surfaces will lie face-to-face around the edges of the pouch and can be heat-sealed so as to provide a peripheral weld around the pack. Surprisingly it has been found that the pack thus formed has different gas permeability characteristics from a pack made from the same layers but well bonded all over. Gases or vapours from the inside seem to have an easier route out of the package than gases or vapours moving from the outside to the inside. From the inside the pack seems to have gas permeabilities determined mainly by the inner film, whereas from the outside the pack seems to have permeabilities determined mainly by the combination of both films.

The resultant packaging material is strong, transparent, and if required can be reverse-printed with the print sandwiched between the films plies, as with conventional film laminates.

### EXAMPLE 2

Polyester and polyethylene films are laminated by applying an overall adhesive to one of the films, superimposing the other film on the adhesive-coated surface, and passing the two films under a roller whose surface is relieved in certain areas, for example in a dot or stripe pattern, so that pressure from the roller in the raised areas produced good bonding between the plies only in those areas. In the other areas the adhesion will be less or non-existent. The laminate thus formed is made into a sealed pouch around the product, as with the laminate of Example 1.

### EXAMPLE 3

A laminate of polyester and polyethylene layers is prepared by extrusion-coating polyethylene onto a pre-formed polyester layer, the polyester layer having been previously coated in certain areas only, for example in a dot or striped pattern, with an adhesion promoter or primer, so that the polyethylene adheres well to the polyester only in those coated regions.

### EXAMPLE 4

In this Example polyethylene is extrusion coated onto a pre-formed polyester layer, as in Example 1, but instead of selectively applying an adhesion promoter, an adhesion reducing agent is selectively applied in those areas which are not required to be well-bonded.

In both Examples 3 and 4 where the polyethylene layer is extruded onto the polyester layer, the extruded layer can be much thinner than in Examples 1 and 2 which use pre-formed polyethylene layers. This will allow a higher outward permeability to moisture vapour, and can be an advantage in packaging produce with a high moisture content.

If an even greater outward permeability is required, strips of porous material, for example "TYVEK" (trade mark) spun-bonded high density polyethylene, can be incorporated into parts of the peripheral seal between the laminate and the co-operating sheet (possibly the same laminate) which makes up the container. The porous strips break the seal and allow restricted vapour or gas transmission from within the container.

CLAIMS:

1.  A packaging material comprising two plies of flexible sheet material laminated together, characterised in that both plies are permeable to a selected gas or gases, and the two plies are secured together in some areas but not in others, or are secured together more strongly in some areas than in others.

2.  A packaging material according to claim 1 wherein the two plies are secured together by adhesive applied in a discontinuous manner over the area of the material.

3.  A packaging material according to claim 1 wherein the two plies are secured together by means of an overall-applied adhesive which has been caused to adhere more strongly in some areas than in others.

4.  A packaging material according to claim 1 wherein one of the plies comprises an extrusion coating deposited on the other ply, said other ply having been previously coated in some areas only with an adhesion promoter or an adhesion reducing agent, whereby the plies are secured together more strongly or less strongly, respectively, in said areas than in the remainder of the material.

5.  A packaging material according to any one of the preceding claims wherein the two plies are of different materials.

6.  A packaging material according to claim 5 wherein one ply is of polyester film and the other is of polyethylene.

7.  A package made from packaging material according to any one of the preceding claims.

8.    A package comprising two sheets of flexible packaging material peripherally sealed together around the product, the peripheral seal being interrupted by one or more portions of a porous material sandwiched between the packaging sheets.

9.    A package according to claim 8 wherein said porous material is a spun-bonded plastics material.

10.    A package according to claim 9 wherein said porous material is spun-bonded high density polyethylene.